# EUROPEAN PATENT APPLICATION

(11) **EP 1 312 463 A2**
(43) Date of publication of application: **21.05.2003**
(21) Application number: 02025393.6
(22) Date of filing: 14.11.2002
(51) Int. Cl.: B29D 31/518, A43B 5/04

(54) **Shoe**

(30) Priority: 19.11.2001 IT MI20012428
(71) Applicant: HTM SPORT S.p.A., 16035 Rapallo (Genova) (IT)
(72) Inventor: Baggio, Giorgio, 35018 S. Martino di Lupari (Padova) (IT); Marconato, Luca, 31030 Sala di Istrana (Treviso) (IT)
(74) Representative: Forattini, Amelia

(57) **Abstract**

A shoe (1), particularly a ski boot or ice climbing boot, of the type that includes a shell (2) that has a sole (6) provided, at the rear, with a tab (7) that is suitable to interact with a heel unit of a ski binding or crampon binding. A reinforcement (8) provided with a means for anchoring to the tab and/or shell is overmolded on the tab.

## Description

The present invention relates to a shoe, particularly a boot for skiing or for ice climbing.

Currently, the shells and quarters of these shoes of conventional type are usually made of plastics, and therefore the need is strongly felt to use simultaneously materials that are as rigid as possible, for optimum transmission of forces, for example to the ski or crampon, and as soft as possible, in order to increase comfort for the user's foot.

Generally, a compromise is made which privileges the overall rigidity of the shell, since in the heel and toe regions it is also necessary to contrast the interaction with the bindings for example associated with the ski, which by being usually made of extremely rigid components must not scratch or deform the plastic material, on penalty of failure to provide a stable connection.

It is in fact known to provide, in the heel and toe regions, tabs that protrude at the rear and front of the shell, are mutually connected so as to form the sole and allow optimum connection to the binding.

EP-00 30 225 discloses a shoe that has, in the heel region and in an intermediate position between the heel and the upper, a member that is adapted to cushion vibrations. This solution, however, cannot be used for the type of shoe considered herein.

Likewise, GB-2,144,023 discloses an insole for a shoe which has, at the perimetric region of the heel, a horseshoe-shaped plate of rigid synthetic resin; however, the reinforcement can be used at most on trekking or gym shoes to avoid possible splaying of the sole, which is usually of the soft type, during the resting of the heel on the ground while walking or running.

However, even this solution is not applicable to a ski boot or to a climbing boot for solving the stated problems.

The aim of the present invention is to overcome the drawbacks noted above and solve the described technical problems by providing a sports shoe that allows to achieve both optimum comfort for the foot of the user and optimum interaction with the binding associated with a ski or with a binding to an ice crampon.

Another object is to provide a shoe that allows to use a low-cost material for the shell.

Another object is to provide a shoe that allows to provide a shell that does not suffer damage at the coupling to a ski binding or for a crampon.

This aim, these objects and others that will become better apparent from the description that follows are achieved by a shoe, as claimed in the appended claims.

Other objects will become better apparent during the description that follows, which must be considered together with the accompanying drawings, which illustrate by way of non-limitative example a particular embodiment of the invention and wherein:

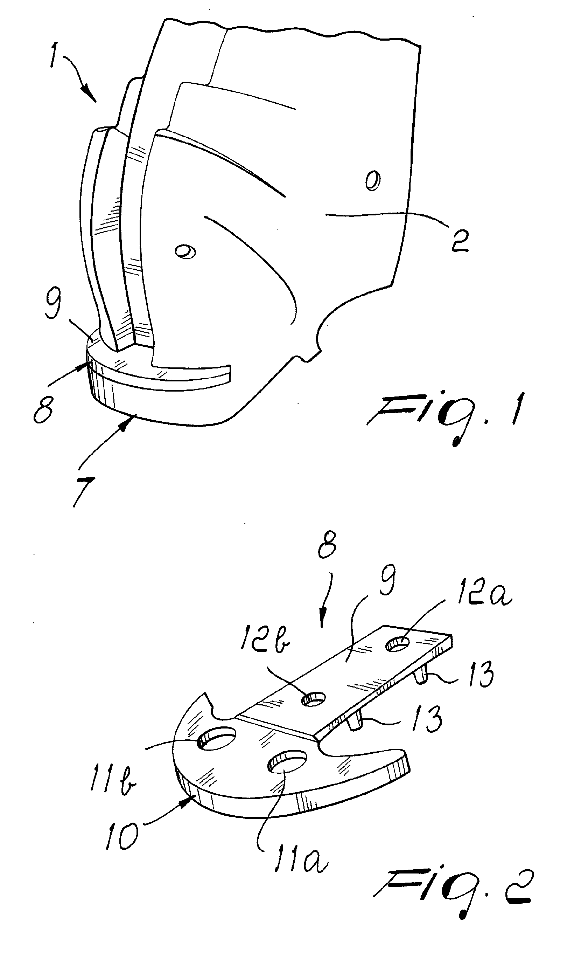

Figure 1 is a rear perspective view of the reinforcement;
Figure 2 is a rear view of the shell with the associated reinforcement;

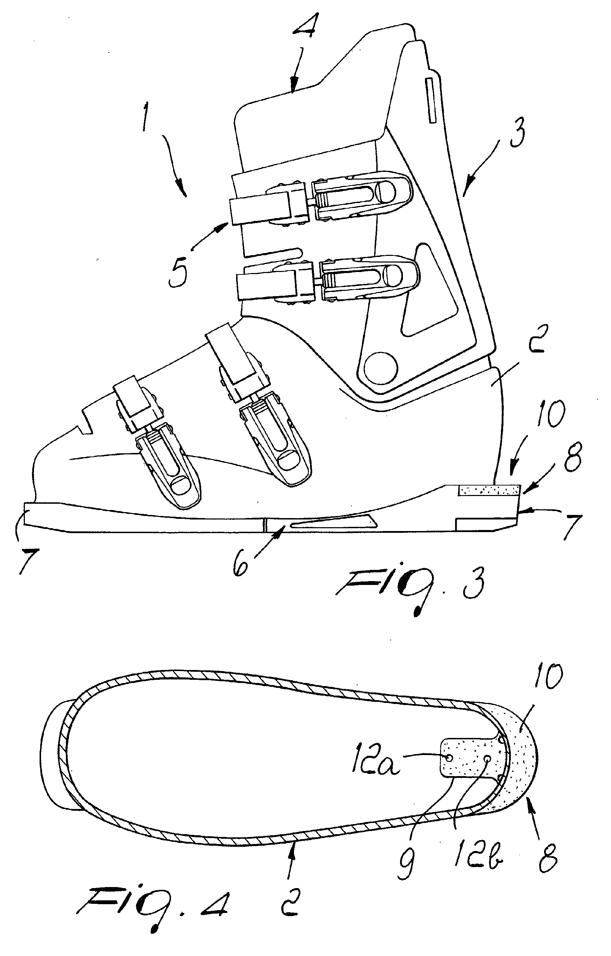

Figure 3 is a side view of a ski boot;
Figure 4 is a sectional view of the boot, according to a horizontal plane that passes through the reinforcement;
Figure 5 is a rear view of the boot;

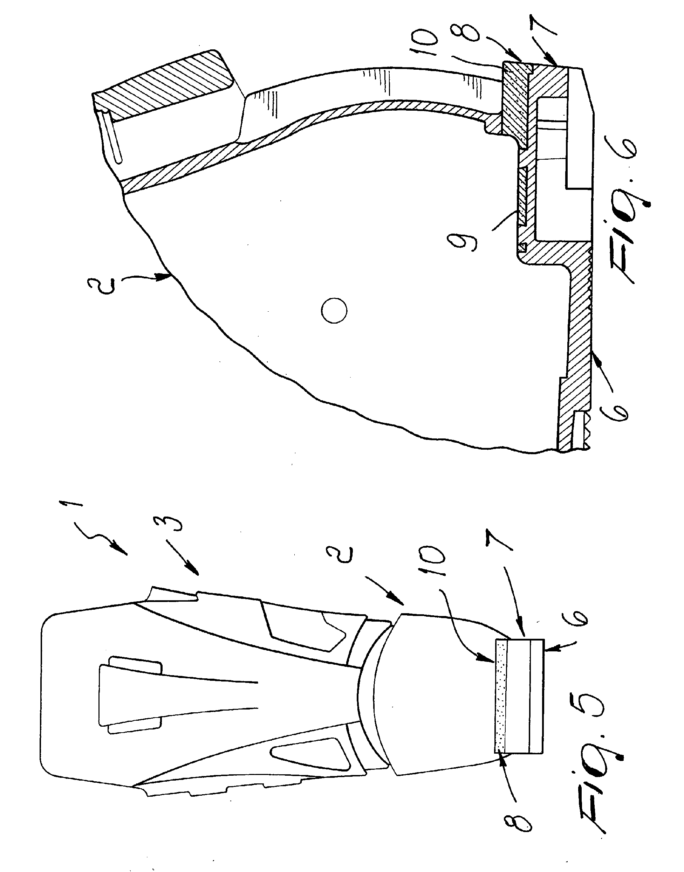

Figure 6 is a sectional view of the rear part of the boot, according to a longitudinal plane, in which the pins have been omitted.

With reference to the cited figures, and bearing in mind that they exemplify a particular embodiment and are in variable scale and that individual reference numerals designate therein identical or equivalent parts, the reference numeral 1 designates a sports shoe that is constituted by a ski boot composed of a shell 2 to which a quarter 3 is articulated and inside which a soft innerboot 4 is arranged.

Suitable closure and fastening levers 5 are associated at the shell 2 and at the quarter 3.

The shell 2 has a sole 6, which has, at the front and at the rear, a tab 7 that constitutes the toe and heel of the boot; the tabs can be arranged at a heel unit and toe unit of a ski binding, or a binding for an ice crampon is placed thereat.

A reinforcement 8 can be overmolded at least at the rear tab 7 and is preferably shaped like a letter T, whose stem 9 preferably has a rectangular plan shape and whose head 10 is curved so as to blend with the perimetric shape of the tab 7.

At the stem 9 and/or at the head 10 of the reinforcement 8 there is a means for anchoring to the tab and/or shell which is constituted for example by a pair of first holes 11a and 11b formed at the head 10 in a region that is adjacent to the ends.

A second pair of holes 12a and 12b is formed at the stem 9.

An additional anchoring means, constituted by one or more pins or protrusions 13, is present at the lower surface of the stem 9 of the reinforcement 8 and could also constitute a removable centering means for correct positioning in the mold.

While the shell and the quarter can be made of low-cost plastic material which accordingly does not have a high rigidity, in order to allow optimum comfort for the foot and leg of the user, the reinforcement 8 also can be made of a low-cost material which however has a high rigidity and is therefore resistant to any scratching caused by its interaction with the heel unit or toe unit of a binding of the ski or crampon.

It has thus been shown that the shoe has achieved the intended aim and objects, since it allows to achieve both optimum comfort for the user's foot and optimum interaction with the binding associated with a ski or with a binding to an ice crampon.

The described shoe in fact allows to use, for the shell, a material of the soft and low-cost type that does not suffer damage at the coupling to a ski binding or for a crampon.

The various means for performing certain different functions need not certainly coexist only in the illustrated embodiment but can be present per se in many embodiments, including ones that are not illustrated.

The materials and the configuration or dimensions of the individual components of the shoe may of course be the most pertinent and disparate according to specific requirements.

## Claims

1. A shoe, particularly a ski boot or ice climbing boot, comprising a shell that has a sole provided, at the rear, with a tab that can be arranged at a heel unit of a ski binding or crampon, **characterized in that** a reinforcement provided with a means for anchoring said tab and/or shell is overmolded on said tab.

2. The shoe according to claim 1, comprising a shell made of a material that is not highly rigid and has a sole provided, at the front and at the rear, with a tab that constitutes the toe and heel of said shoe, **characterized in that** at least one reinforcement made of a highly rigid material can be overmolded on at least one of said tabs, which can be arranged at a heel unit and toe unit of a ski binding or at which a binding for an ice crampon is arranged.

3. The shoe according to claims 1 and 2, **characterized in that** said at least one reinforcement is T-shaped.

4. The shoe according to claims 1 and 3, **characterized in that** said at least one reinforcement has a stem that has a rectangular plan shape.

5. The shoe according to claims 1 and 3, **characterized in that** said at least one reinforcement has a head that is curved so as to blend with the perimetric shape of said tab.

6. The shoe according to one or more of the preceding claims, **characterized in that** a means for anchoring to said tab and/or shell is provided at said stem and/or head of said reinforcement, said means being constituted by a pair of first holes formed at said head in a region that is adjacent to the ends.

7. The shoe according to one or more of the preceding claims, **characterized in that** a means for anchoring to said tab and/or shell is present at said stem and/or head of said reinforcement and is constituted by a second pair of holes formed at said stem.

8. The shoe according to one or more of the preceding claims, **characterized in that** a means for anchoring to said tab and/or shell is provided at said stem and/or head of said reinforcement and is constituted by one or more pins or protrusions that protrude downward with respect to the lower surface of said stem and/or reinforcement.

9. The shoe according to claims 1 and 8, **characterized in that** said one or more pins or protrusions constitute a removable centering means for the correct positioning of said at least one reinforcement in the mold.
